(19) Europäisches Patentamt

European Patent Office

Office européen des brevets

(11) Publication number: **0 290 009 B1**

(12) **EUROPEAN PATENT SPECIFICATION**

(45) Date of publication of patent specification: **06.10.93**   (51) Int. Cl.⁵: **G11B 7/24**

(21) Application number: **88107163.3**

(22) Date of filing: **04.05.88**

(54) **Information storage medium.**

(30) Priority: **08.05.87 JP 112116/87**
    **08.05.87 JP 112117/87**
    **14.05.87 JP 116005/87**

(43) Date of publication of application:
    **09.11.88 Bulletin 88/45**

(45) Publication of the grant of the patent:
    **06.10.93 Bulletin 93/40**

(84) Designated Contracting States:
    **DE FR NL**

(56) References cited:
    **EP-A- 0 150 829**
    **EP-A- 0 186 467**

    **PATENT ABSTRACTS OF JAPAN vol. 7, no.
    81 (M--205)(1226) 05 April 1983, & JP-A-58
    8694**

(73) Proprietor: **KABUSHIKI KAISHA TOSHIBA
    72, Horikawa-cho
    Saiwai-ku
    Kawasaki-shi Kanagawa-ken 210(JP)**

(72) Inventor: **Ohkawa, Hideki c/o Patent Division
    Kabushiki Kaisha Toshiba
    1-1 Shibaura 1-chome
    Minato-ku Tokyo 105(JP)**
    Inventor: **Higashino, Hiroyuki c/o Patent Division
    Kabushiki Kaisha Toshiba
    1-1 Shibaura 1-chome
    Minato-ku Tokyo 105(JP)**

(74) Representative: **Henkel, Feiler, Hänzel & Partner
    Möhlstrasse 37
    D-81675 München (DE)**

## Description

The present invention relates to an information storage medium which exhibits high sensitivity during recording and can obtain a high contrast ratio during reproduction.

Information can be recorded by forming pits in a metal film or a semiconductor film using a laser beam and can be read in accordance with intervals of the pit arrays, or the diameters of the pits. Although various techniques for forming pits have been proposed, the pits are basically formed by melting a recording film utilizing the heat generated when a laser beam is absorbed in the film. Therefore, a laser beam must be absorbed in a recording film once. The amount of the laser beam to be absorbed depends on the refractive index, particularly the complex index of refraction $n^*$, of a metal or semiconductor film serving as the recording film. The complex index of refraction $n^*$ is given by $n^* = n - ik$ where $n$ is a refractive index, $i = \sqrt{-1}$ and $k$ is a damping coefficient. Generally, in a metal, $k$ is large, and hence the absorption ratio of incident light is high. For this reason, the reflectivity is almost monotonously increased in proportion to the film thickness, and is eventually converged to a constant value.

It is known that a metal or semiconductor element such as Te and Bi has sufficient write sensitivity when written even with a low-output semiconductor laser. However, these elements are easily oxidized at a high humidity. For this reason, a protective film such as $SiO_2$ is stacked on the surface, which in turn, causes degradation in write sensitivity in pit formation type information storage media (M. Chen and V. Marrello, J. Vac. Sci. Tech. 18, 75 (1981)).

M. Mashita and N. Yasuda disclose a Te film containing carbon and hydrogen (to be referred to as a Te-C film hereinafter) in "Proceedings SPIE", 329, 190, (1982). The Te-C film is excellent in oxidation resistance, and preserves the high write sensitivity of a Te film without using a protective film. This Te-C film has a structure in which Te clusters are dispersed in a C-H matrix. According to the present inventors, when a Te film (formed by sputtering in an Ar gas atmosphere) and the Te-C film are compared with each other, provided that they absorb laser beams with the same wavelength, the damping coefficient of the Te film is larger than that of the Te-C film having the C-H matrix. For example, under a laser beam with wavelength of 630 nm, $n^*(Te) = 3.9-3.5i$, and $n^*(Te-C) = 3.5-1.1i$. Under a laser beam with wavelength of 830 nm, $n^*(Te) = 5.2-1.6i$, and $n^*(Te-C) = 3.7-0.59i$. This fact means that $n^*$ of a recording film containing carbon, hydrogen, and a metal or semiconductor greatly varies depending on its composition ratio. Therefore, when a metal film having a large value of $k$ is to be used, if the metal can be dispersed in the C-H matrix in the form of clusters, $n^*$ can be changed by reducing $k$.

Incidentally, an attention has been paid to form on the substrate a recording film as thin as possible.

Various systems of forming pits have been proposed. They are essentially based on the fact that pits are formed by melting a recording film utilizing the heat generated when a laser beam is absorbed (heat mode system). Consequently, as the film thickness is increased, a higher laser power is required to melt the film. If a low-power laser beam such as the one from a semiconductor laser is used, the write sensitivity is inevitably degraded (i.e. higher output is required).

In a recording film exhibiting reflectivity prominently changing due to the multiple interference effect, if the film thickness is decreased, writing can be performed with a lower power, but the reflectivity is lowered. Therefore, information cannot be read at a high contrast ratio.

In addition, the reflectivity is greatly changed even when the film thickness is only slightly deviated from a desired thickness. Furthermore, as described above, when a recording film containing a metal or semiconductor element, carbon, and hydrogen and/or fluorine is to be produced, if the ratio of these elements in the recording film is changed, $k$ in $n^* = n - ik$ is also changed to a greater extent. For this reason, the reflectivity due to the multiple interference effect greatly varies even within the same film thickness. For these reasons, the manufacturing yield is decreased.

Another prior art document is EP-A-0 186 467 disclosing an information storage medium having the features of the precharacterising portion of claim 1. In this prior art document it is described that the recording layer consists of Te, C and H. However, the Te is present in the form of crystals in the film as deposited. When the recording layer is irradiated with a power laser beam, the Te crystal in the film is enlarged so as to change the reflectivity of the recording layer. This means that the recording mechanism of the prior art document utilizes a change in reflectivity of the recording layer which essentially differs from the recording mechanism of the present invention which utilizes pit formation.

According to the invention the information storage medium is characterised by the features of the characterising portion of claim 1.

This invention can be more fully understood from the following detailed description when taken in conjunction with the accompanying drawings, in which:

Fig. 1 is a view of a recording film forming apparatus;

Fig. 2 is a graph showing a relationship between the thickness of a recording film and the reflectivity due to the multiple interference effect;

Figs. 3A to 3C are graphs respectively showing signals reproduced from recording films having a maximum and non-maximum values of the reflectivity;

Fig. 4 is a graph showing a relationship between a contrast ratio and write power; and

Fig. 5 is a view of an information storage medium according to the present invention.

The present invention will now be described with reference to the drawings. In an information storage medium of the present invention, a stored information is read based on an intensity of light reflected from a recording film when reproducing light is applied to the recording film.

As shown in Fig. 5, an information storage medium according to the present invention has substrate 22 and recording film 24. Substrate 22 is formed from a transparent material including a glass or an organic resin such as polycarbonate and polymethyl methacrylate.

Recording film 24 is formed on substrate 22. The recording film contains

(i) a metal or semiconductor element including Te, Se, Bi, Ge, Sb, Pb, Ga, In and Ag; together with or without:

(ii) carbon; and

(iii) hydrogen or fluorine, or both of them.

Information can be written in recording film 24 by forming pits (not shown) therein.

In the present invention, the thickness of recording film is defined in terms of a local maximum value of reflectivity of the reproducing light, due to a multiple interference effect, by recording film 24. As shown in Fig. 5, the reflectivity (= the square of the absolute value of Fresnel's reflection coefficient) influenced by the multiple interference effect of a thin film is increased when the phase of a light with Fresnel's reflection coefficient $r_1$ which has transmitted and reflected by a recording film 24/substrate 22 interface coincides with the phases of lights with reflection coefficients $r_2$, $r_3$, ..., which have been introduced and reflected by the recording film 24/substrate 22 interface, whereas it is decreased when they do not coincide with each other. In an element having a small value of $\bar{k}$, or a composition in which a metal or semiconductor element is dispersed in the C-H matrix, this multiple interference effect becomes conspicuous.

According to an embodiment of the present invention, the recording film has a thickness which provides a local maximum value of reflectivity of the reproducing light, due to a multiple interference effect, by the recording film. In this case, the recording film preferably has a thickness within a range of 100 nm or less, more preferably within a range of 10 to 80 nm.

According to another embodiment of the present invention, the recording film has a thickness smaller than, and preferably 1/4 to 3/4 of, that thickness which provides the first local maximum value of reflectivity of the reproducing light, due to a multiple interference effect, by the recording film. The first local maximum value of reflectivity due to the multiple interference appears at the thinner side of film thickness. In this case, the recording film preferably has a thickness within a range of 5 to 50 nm.

According to the present invention, the recording film can be formed, for example, as follows. First, the flow rates of a hydrocarbon gas and/or fluorocarbon gas and the sputtering time of a metal or semiconductor target are predetermined so as to form recording films having various film thicknesses as samples. Then, a relationship between the film thicknesses and the reflectivity is obtained to select one of the film thicknesses providing local maximum values of reflectivity. Finally, the sputtering time is adjusted so as to manufacture a recording film having a desired film thickness providing the local maximum value of reflectivity. With this arrangement, since the flow rates of the respective components constituting the recording film are predetermined, the ratio of the respective components in the recording film is not changed. In addition, even if a film thickness is slightly deviated from a desired one, the reflectivity is kept close to the local maximum value, and therefore is not greatly changed.

If the thickness of a recording film gives a local maximum value of reflectivity as described above, the contrast ratio of the intensity of the reflecting light from the recording film corresponding to a presence or absence of pits becomes high upon detection of a read signal. As a result, noise in the signal is relatively reduced, and a so-called S/N (signal/noise) ratio is increased, thereby facilitating electrical processing of the signal. In addition, according to the present invention, write sensitivity is improved by forming the recording film having a film thickness of 100 nm or less, preferably, 10 to 80 nm as noted above.

In general, when pits are formed so as to record information, a laser beam is pulse-oscillated by directly modulating a driving current. In this case, the product of a pulse width and laser power represents the dimension of energy. Therefore, when high-density recording is to be performed by reducing the pulse width using the same output energy while an energy level necessary for laser oscillation is kept, the laser power must be increased. According to the present invention, when a recording film having a film thickness smaller than that providing the maximum value of reflectivity is used as described above and a pulse width of 20 to 50 ns is required to reduce the heat capacity of the recording film, a source laser power of 30 mW or less can be used, and hence a low-output laser such as a semiconductor laser can be used.

Example 1

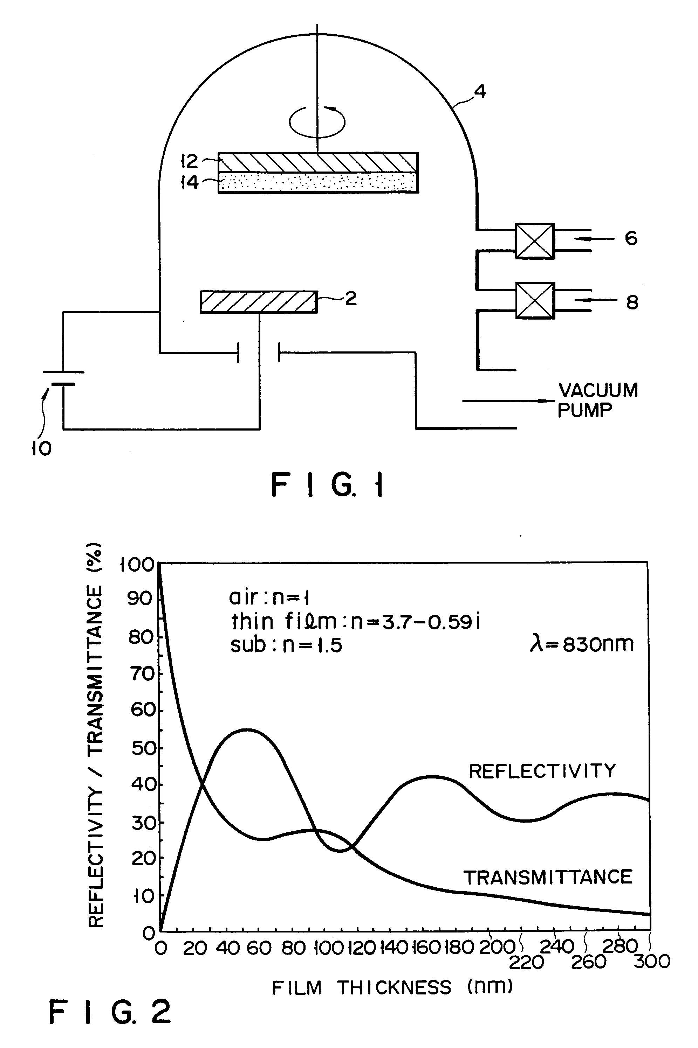

As shown in Fig. 1, after air was exhausted from vacuum chamber 4 storing Te sputter target 2 having a diameter of 5 inches as a cathode to obtain a vacuum pressure of $1,33 \times 10^{-4}$ Pa, methane gas 6 and argon gas 8 were charged into chamber 4 and the flow rates thereof were adjusted so as to obtain a pressure allowing a glow discharge. The both flow rates of methane and argon gases 6 and 8 were set at 6 SCCM (Standard cubic centimeters per minute). In this atmosphere, target 2 was sputtered by supplying a power of 100 W from DC power source 10 to form recording film 14 on glass plate ($n^* = 1.52$) 12 serving as a substrate. It was confirmed that the obtained recording film contained carbon, hydrogen, and Te.

Complex index of refraction $n^*$ of this recording film with respect to a laser beam having a wavelength of 830 nm was $n^* = 3.7 - 0.59i$. Fig. 2 shows the relationship between the film thickness and the reflectivity with respect the laser beam of this wave length when the reflectivity of the substrate is also taken into consideration. Note that the refractive index of air is 1.

It is apparent from Fig. 2 that the reflectivity due to multiple interference effect becomes a local maximum when the film thicknesses of the recording film are 50, 160, and 270 nm. In addition, the reflectivity is scarcely changed within the range of ±5 nm to the film thickness providing a local maximum. Therefore, even if reproducibility of the film thickness slightly varies upon manufacturing, the reflectivity is scarcely influenced.

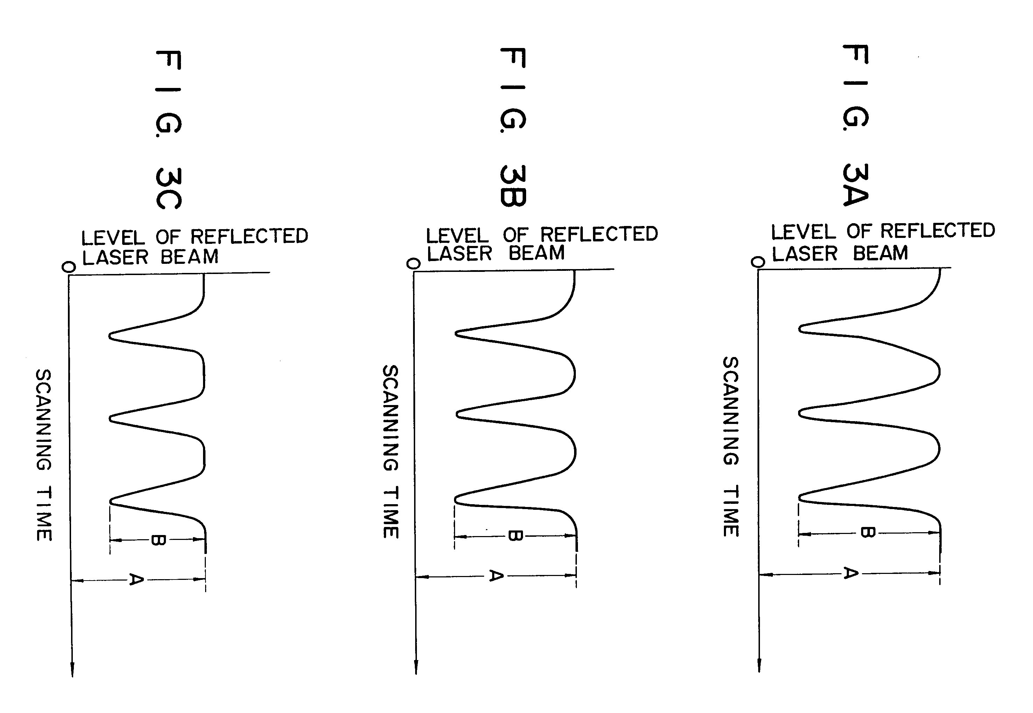

The sputtering time was adjusted after the relationship between the sputtering time and the film thickness was obtained, and the recording film having a thickness of 50 nm was deposited on a PC (polycarbonate) disk substrate pregrooved for guiding a laser beam. Fig. 3A shows a reproduction signal obtained when information written in the recording film with a pulse width of 100 ns using a GaAs semiconductor laser with 8 mW was read. Figs. 3B and 3C respectively show the reproduction signals obtained when the recording films had film thicknesses of 20 and 100 nm and the same value of $n^*$.

The contrast ratios of the signals can be given by the B/A ratios in the drawings. The contrast ratio is regarded to be high as the B/A ratio is increased.

It is apparent that the contrast ratio of the recording film of 50 nm having a local maximum value of reflectivity due to multiple interference effect is the highest.

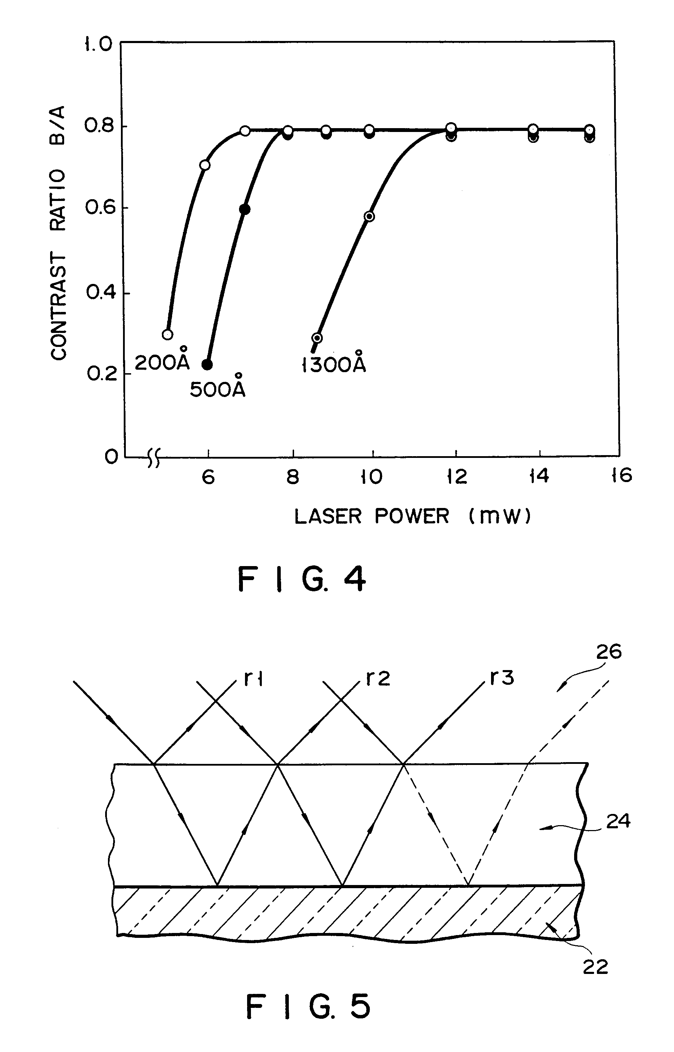

Next, the recording films of 50 and 160 nm were selected from those providing the local maximum values, and then the relationship between laser power during writing and the B/A ratios of readout signals was checked. Fig. 4 shows the result. The writing was performed by a laser beam with a pulse width of 60 nsec while the Te-C film formed on the pregrooved PC substrate was rotated with the linear velocity of 5 m/sec. It is apparent from Fig. 4 that the thin recording film of 50 nm, which falls within the range of 10 to 80 nm has a lower threshold value of power during writing, and hence has higher sensitivity.

In addition, the relationship between laser power during writing and the B/A ratios of readout signals was checked with respect to the recording film of 20 nm. The result is also shown in Fig. 4. It is apparent from Fig. 4 that a recording film having a thickness 1/4 to 3/4 that of the recording film providing the first local maximum value of reflectivity, which appears at the thinner side of film thickness, has a lower threshold value of power during writing, and hence has higher sensitivity.

The same procedures were followed as above, except that Se, Bi, Ge, Sb, Pb, Ga, In, or Ag was used instead of Te, and similar results were obtained.

In the above Example, a $CH_4$ gas was used as a source gas for carbon and hydrogen. Similarly, carbon and hydrogen can be contained in the recording film using other gases, e.g., an alkane gas such as $C_2H_6$ or $C_3H_8$, and alkene gas such as $C_2H_4$, and an alkyne gas such as $C_2H_2$.

Example 2

A recording film was formed by the same apparatus as used in Example 1 in the same conditions except that a $C_3F_8$ gas with the flow rate of 6 SCCM was used in place of the methane gas. It was confirmed that the obtained recording film contained carbon, fluorine, and Te. Since the complex index of refraction of the recording film was determined by a sputter amount of Te and the ratio of flow rates of a rare gas and a hydrocarbon (or fluorocarbon) gas, the complex index of refraction was substantially the same as that in Example 1 using a laser beam equivalent to that in Example 1. Therefore, the relationship between the film thicknesses and the reflectivity was the same as that in Fig. 2. When readout signals, write laser power, and the B/A ratios were observed with respect to recording films respectively having thicknesses of 50, 20, 100, and 130 nm, the results were equivalent to those shown in Figs. 3A, 3B, 3C, and 4.

The same procedures were followed as above, except that Se, Bi, Ge, Sb, Pb, Ga, In, or Ag was used instead of Te, and similar results were obtained.

Although in Example 2, a $C_3H_8$ gas was used as a source gas for carbon and fluorine, $CF_4$, $C_2F_6$, or the like may be used.

Example 3

In the same apparatus as that in Example 1, a recording film was formed in the same conditions as those in Example 1 except that a mixed gas obtained by mixing a $C_3H_8$ gas in a methane gas was supplied at a flow rate of 10 SCCM. It was confirmed that the obtained recording film contained carbon, hydrogen, fluorine, and Te. The complex index of refraction of this recording film with respect to a laser beam equivalent to that used in Example 1 was the same as that in Example 1. Therefore, the relationship between the film thicknesses and the reflectivity was the same as that in Fig. 2. When readout signals, write laser power, and the B/A ratios were observed with respect to recording films respectively having film thicknesses of 50, 20, 100, and 130 nm in the same conditions as those in Example 1, the results were equivalent to those in Figs. 3A, 3B, 3C, and 4.

The same procedures were followed as above, except that Se, Bi, Ge, Sb, Pb, Ga, In, or Ag was used instead of Te, and similar results were obtained.

The present invention is not limited to the above Examples. Se, Bi, Ge, Sb, Pb, Ga, In, or Ag may be used as a metal or semiconductor element in place of Te, as noted above.

A wavelength of 830 nm used in the Examples corresponds to an oscillation wavelength of a GaAs semiconductor laser having a specific composition. When a semiconductor laser having a different composition, or an Ar laser or He-Ne laser having a different oscillation wavelength is employed, the reflectivity must be obtained from n* of each wavelength. In addition, a glass plate or an organic resin substrate such as polymethyl methacrylate (PMMA) may be used as a substrate material.

**Claims**

1. An information storage medium in which information is read based on an intensity of light reflected from a recording film when reproducing light is applied to the recording film, said medium comprising:
   a substrate (12, 22); and
   a recording film (14, 24), formed on said substrate (12, 22), comprising a metal or semiconductor element, carbon, and at least one element selected from the group consisting of hydrogen and fluorine,
   characterized in that said recording film (14, 24) is deposited on the substrate as an amorphous layer and has a thickness which provides a local maximum value of reflectivity of the reproducing light, due to a multiple interference effect, by said recording film (14, 24), and wherein the recording medium records the information by forming pits.

2. The information storage medium according to claim 1, characterized in that the recording film further comprises carbon, and at least one element selected from the group consisting of hydrogen and fluorine.

3. The information storage medium according to claim 1, characterized in that said recording film (14, 24) has a thickness 1/4 to 3/4 of that of the recording film which provides the first local maximum value of reflectivity of the reproducing light, due to a multiple interference effect, by said recording film (14, 24), said first local maximum value of reflectivity appearing at the thinner side of film thickness.

4. The information storage medium according to claim 1, 2 or 3, characterized in that said recording film (14, 24) has a thickness within a range of 10 to 80 nm.

5. The information storage medium according to claim 1, 2 or 3, characterized in that said metal or semiconductor element comprises Te, Se, Bi, Ge, Sb, Sn, Pb, Ga, In, or Ag.

6. The information storage medium according to claim 1, 2 or 3, characterized in that said recording film (14, 24) is formed by depositing a metal or semiconductor element by sputtering in an atmosphere of a hydrocarbon gas and/or a fluorocarbon gas, and a rare gas.

7. The information storage medium according to claim 1, 2 or 3, characterized in that information is recorded in said recording film (14, 24) by heat mode recording using a laser beam.

8. The information storage medium according to claim 3, characterized in that a film thickness of said recording film (14, 24) is within a range of 5 to 50 nm.

**Patentansprüche**

1. Informationsspeichermedium, bei welchem eine Information auf der Basis einer Intensität des von einem Aufzeichnungsfilm reflektierten Lichts bei Applikation von reproduzierendem Licht auf den Aufzeichnungsfilm abgelesen wird, umfasend ein Substrat (12, 22) und einen auf dem Substrat (12, 22) ausgebildeten Aufzeichnungsfilm (14, 24) mit einem Metall oder Halbleiterelement, Kohlenstoff und mindestens einem Element aus der Gruppe Wasserstoff und Fluor, dadurch gekennzeichnet, daß der Aufzeichnungsfilm (14, 24) auf dem Substrat als amorphe Schicht abgelagert ist und eine Dicke aufweist, die in Folge eines Mehrfachinterterenzeffekts durch den Aufzeichnungsfilm (14, 24) ein lokales Reflexionsmaximum des reproduzierenden Lichts liefert, und daß das Aufzeichnungsmedium die Information durch Pitbildung aufzeichnet.

2. Informationsspeichermedium nach Anspruch 1, dadurch gekennzeichnet, daß der Aufzeichnungsfilm weiter Kohlenstoff und mindestens ein Element aus der Gruppe Wasserstoff und Flour enthält.

3. Informationsspeichermedium nach Anspruch 1, dadurch gekennzeichnet, daß der Aufzeichnungsfilm (14, 24) eine Dicke 1/4 bis 3/4 derjenigen des Aufzeichnungsfilms, der in Folge eines Mehrfachinterferenzeffekts durch den Aufzeichnungsfilm (14, 24) das erste lokale Reflexionsmaximum des reproduzierenden Lichts liefert, wobei das erste lokale Reflexionsmaximum auf der dünneren Seite der Filmdicke auftritt, aufweist.

4. Informationsspeichermedium nach Anspruch 1, 2 oder 3, dadurch gekennzeichnet, daß der Aufzeichnungsfilm (14, 24) eine Dicke im Bereich 10 bis 80 nm aufweist.

5. Informationsspeichermedium nach Anspruch 1, 2 oder 3, dadurch gekennzeichnet, daß das Metall oder Halbleiterlement Te, Se, Bi, Ge, Sb, Sn, Pb, Ga, In oder Ag umfaßt.

6. Informationsspeichermedium nach Anspruch 1, 2, oder 3, dadurch gekennzeichnet, daß der Aufzeichnungsfilm (14, 24) durch Ablagern eines Metalls oder Halbleiterelements durch Zerstäuben in einer Atmosphäre eines gasförmigen Kohlenwasserstoffs und/oder eines gasförmigen Flourkohlenstoffs und eines Edelgases gebildet ist.

7. Informationsspeichermedium nach Anspruch 1, 2, oder 3, dadurch gekennzeichnet, daß eine Information in dem Aufzeichnungsfilm (14, 24) durch Wärmeaufzeichnung unter Verwendung eines Laserstrahls aufgezeichnet ist.

8. Informationsspeichermedium nach Anspruch 3, dadurch gekennzeichnet, daß die Filmdicke des Aufzeichnungsfilms (14, 24) im Bereich von 5 bis 50 nm liegt.

**Revendications**

1. Support de mémorisation d'informations, dans lequel des informations sont lues en fonction de l'intensité de la lumière réfléchie par un film d'enregistrement lorsque de la lumière de lecture est appliquée au film d'enregistrement, le support comprenant :
   un substrat (12, 22), et
   un film d'enregistrement (14, 24) formé sur le substrat (12, 22), contenant un métal ou un élément semiconducteur, du carbone, et au moins un élément choisi dans le groupe qui comprend l'hydrogène et le fluor,
   caractérisé en ce que le film d'enregistrement (14, 24) est déposé sur le substrat sous forme d'une couche amorphe et a une épaisseur qui donne une valeur locale maximale du pouvoir réflecteur de la lumière de lecture, à cause d'un effet d'interférences multiples, par le film d'enregistrement (14, 24), et dans lequel le support d'enregistrement enregistre les informations sous forme de creux.

2. Support de mémorisation d'informations selon la revendication 1, caractérisé en ce que le film d'enregistrement comporte en outre du carbone, et au moins un élément choisi dans le groupe qui comprend l'hydrogène et le fluor.

3. Support de mémorisation d'informations selon la revendication 1, caractérisé en ce que le film d'enregistrement (14, 24) a une épaisseur comprise entre le quart et les trois-quarts de celle d'un film d'enregistrement qui donne la première valeur locale maximale du pouvoir réflecteur pour la lumière de lecture, par un effet d'interférences multiples, par le film d'enregistrement (14, 24), cette première valeur locale maximale du pouvoir réflecteur apparaissant du côté relativement mince du film.

4. Support de mémorisation d'informations selon la revendication 1, 2 ou 3, caractérisé en ce que le film d'enregistrement (14, 24) a une épaisseur comprise entre 10 et 80 nm.

5. Support de mémorisation d'informations selon la revendication 1, 2 ou 3, caractérisé en ce que le métal ou l'élément semi-conducteur est Te, Se, Bi, Ge, Sb, Sn, Pb, Ga, In ou Ag.

6. Support d'enregistrement d'informations selon la revendication 1, 2 ou 3, caractérisé en ce que le film d'enregistrement (14, 24) est formé par dépôt d'un métal ou d'un élément semi-conducteur par pulvérisation dans une atmosphère d'hydrocarbure gazeux et/ou d'un gaz fluorocarboné, et d'un gaz rare.

7. Support d'enregistrement d'informations selon la revendication 1, 2 ou 3, caractérisé en ce que l'information est enregistrée dans le film d'enregistrement (14, 24) par un enregistrement par chauffage à l'aide d'un faisceau laser.

8. Support de mémorisation d'informations selon la revendication 3, caractérisé en ce que l'épaisseur du film d'enregistrement (14, 24) est comprise entre 5 et 50 nm.

F I G. 1

F I G. 2

EP 0 290 009 B1

FIG. 3A

LEVEL OF REFLECTED LASER BEAM

SCANNING TIME

FIG. 3B

LEVEL OF REFLECTED LASER BEAM

SCANNING TIME

FIG. 3C

LEVEL OF REFLECTED LASER BEAM

SCANNING TIME

F I G. 4

F I G. 5